# EUROPEAN PATENT APPLICATION

(11) **EP 4 645 067 A1**
(43) Date of publication of application: **05.11.2025**
(21) Application number: 25172800.2
(22) Date of filing: 28.04.2025
(51) Int. Cl.: G06F 8/30, G06Q 10/0633

(54) **ASSISTED TASK MINING USING LARGE LANGUAGE MODELS**

(30) Priority: 29.04.2024 US 202418648552
(71) Applicant: UiPath, Inc., New York NY 10017 (US)
(72) Inventor: HSIEH, Eric, New York, 10017 (US); CHEN, Chen, New York, 10017 (US); MA, Yunjing, New York, 10017 (US); JIN, Jing, New York, 10017 (US); ZHONG, Minyi, New York, 10017 (US); ZHAO, Nan, New York, 10017 (US); YANG, Jinglong, New York, 10017 (US); LIN, Lin, New York, 10017 (US)
(74) Representative: Ungria López, Javier

(57) **Abstract**

Systems and methods for generating a structured definition of a graph of a workflow are provided. 1) a natural language description of a workflow and 2) a description of one or more APIs (application programming interfaces) for performing the workflow are received. A structured definition of a graph of the workflow is generated using a language model based on the natural language description of the workflow and the description of the one or more APIs. One or more nodes in the structured definition of the graph of the workflow is mapped to at least one of the one or more APIs. The structured definition of the graph of the workflow is output.

## Description

### FIELD

The present invention generally relates to task mining, and more specifically, to assisted task mining using large language models.

### BACKGROUND

Task mining is the process of automatically capturing and analyzing user interactions with a computing system to understand how tasks are performed in real-world scenarios. Conventionally, task mining is performed by recording user interactions, such as, e.g., mouse clicks, keyboard inputs, and screen captures, and analyzing the recorded user interactions to identify patterns, bottlenecks, and opportunities for improving processes. However, conventional task mining is time consuming and requires significant manual intervention. For example, to create a workflow, a user must manually perform the entire workflow and record the tasks with a recorder. In another example, to merge workflows, a user must record many variations of the workflow and merge the records. Accordingly, an improved and/or alternative approach may be beneficial.

### SUMMARY

Certain embodiments of the present invention may provide alternatives or solutions to the problems and needs in the art that have not yet been fully identified, appreciated, or solved by current task mining technologies. For example, some embodiments of the present invention pertain to assisted task mining using large language models.

In one embodiment, systems and methods for generating a structured definition of a graph of a workflow are provided. 1) a natural language description of a workflow and 2) a description of one or more APIs (application programming interfaces) for performing the workflow are received. A structured definition of a graph of the workflow is generated using a language model based on the natural language description of the workflow and the description of the one or more APIs. One or more nodes in the structured definition of the graph of the workflow is mapped to at least one of the one or more APIs. The structured definition of the graph of the workflow is output.

In one embodiment, a natural language description of modifications to the workflow is received. The structured definition of the graph of the workflow is modified using the language model based on the natural language description of the modifications to the workflow. The modified structured definition of the graph of the workflow is output.

In one embodiment, the modifications to the workflow comprise an addition of one or more steps to the workflow. In another embodiment, the modifications to the workflow comprise highlighting one or more steps of the workflow.

In one embodiment, an example comprising a natural language description of an exemplary workflow and a corresponding structured definition of a graph of the exemplary workflow is received. The structured definition of the graph of the workflow is generated based on the example.

In one embodiment, the structured definition of the graph of the workflow is in DOT (DAG (directed acyclic graph) of tomorrow) language grammar. In one embodiment, the language model is a large language model.

### BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:
FIG. 1 is an architectural diagram illustrating a computing system configured to perform one or more embodiments of the present invention;
FIG. 2 shows a method for automatically generate a structured definition of a graph of a workflow, in accordance with one or more embodiments;
FIG. 3 shows an exemplary prompt for generating a structured definition of a graph in DOT language grammar for a reimbursement process workflow, in accordance with one or more embodiments;
FIG. 4 shows illustrative API descriptions, in accordance with one or more embodiments
FIG. 5 shows an illustrative example of a natural language description of a reimbursement process workflow and a corresponding structured definition of a graph in DOT language grammar for the reimbursement process workflow, in accordance with one or more embodiments;
FIG. 6 is an exemplary structured definition of a graph of a reimbursement process workflow in the DOT language grammar, in accordance with one or more embodiments;
FIG. 7 shows an exemplary template sending language model for adding one or more new steps to a workflow or highlighting one or more steps of the workflow, in accordance with one or more embodiments;
FIG. 8 shows exemplary user input defining "msg" for adding one or more new steps to a reimbursement process workflow, in accordance with one or more embodiments;
FIG. 9 shows exemplary user input defining "msg" for highlighting one or more steps in a reimbursement process workflow, in accordance with one or more embodiments;
FIG. 10 shows an exemplary template sending language model for highlighting one or more steps of the workflow, in accordance with one or more embodiments; and
FIG. 11 is an exemplary modified structured definition of a graph of a reimbursement process workflow in the DOT language grammar, in accordance with one or more embodiments.

Unless otherwise indicated, similar reference characters denote corresponding features consistently throughout the attached drawings.

### DETAILED DESCRIPTION OF THE EMBODIMENTS

Some embodiments pertain to assisted task mining using LLMs (large language models). Embodiments described herein leverage LLMs for assisted task mining for, e.g., mapping APIs (application programing interfaces), creating workflow steps, merging workflows, retrieving processes from a plurality of workflows, etc. Advantageously, embodiments described herein eliminate time-consuming manual steps in task mining, reduce workflow capture time, and reduce workflow retrieval time.

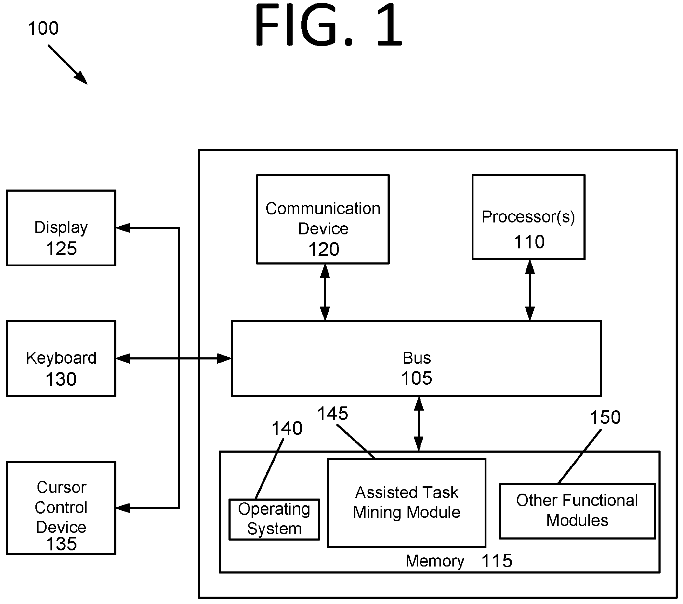

FIG. 1 is an architectural diagram illustrating a computing system 100 for assisted task mining, according to an embodiment of the present invention. In some embodiments, computing system 100 may be one or more of the computing systems depicted and/or described herein. Computing system 100 includes a bus 105 or other communication mechanism for communicating information, and processor(s) 110 coupled to bus 105 for processing information. Processor(s) 110 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 110 may also have multiple processing cores, and at least some of the cores may be configured to perform specific functions. Multi-parallel processing may be used in some embodiments. In certain embodiments, at least one of processor(s) 110 may be a neuromorphic circuit that includes processing elements that mimic biological neurons. In some embodiments, neuromorphic circuits may not require the typical components of a Von Neumann computing architecture.

Computing system 100 further includes a memory 115 for storing information and instructions to be executed by processor(s) 110. Memory 115 can be comprised of any combination of random access memory (RAM), read-only memory (ROM), flash memory, cache, static storage such as a magnetic or optical disk, or any other types of non-transitory computer-readable media or combinations thereof. Non-transitory computer-readable media may be any available media that can be accessed by processor(s) 110 and may include volatile media, non-volatile media, or both. The media may also be removable, non-removable, or both. Computing system 100 includes a communication device 120, such as a transceiver, to provide access to a communications network via a wireless and/or wired connection. In some embodiments, communication device 120 may include one or more antennas that are singular, arrayed, phased, switched, beamforming, beamsteering, a combination thereof, and or any other antenna configuration without deviating from the scope of the invention.

Processor(s) 110 are further coupled via bus 105 to a display 125. Any suitable display device and haptic I/O may be used without deviating from the scope of the invention.

A keyboard 130 and a cursor control device 135, such as a computer mouse, a touchpad, etc., are further coupled to bus 105 to enable a user to interface with computing system 100. However, in certain embodiments, a physical keyboard and mouse may not be present, and the user may interact with the device solely through display 125 and/or a touchpad (not shown). Any type and combination of input devices may be used as a matter of design choice. In certain embodiments, no physical input device and/or display is present. For instance, the user may interact with computing system 100 remotely via another computing system in communication therewith, or computing system 100 may operate autonomously.

Memory 115 stores software modules that provide functionality when executed by processor(s) 110. The modules include an operating system 140 for computing system 100. The modules further include an assisted task mining module 145 that is configured to perform all or part of the processes described herein or derivatives thereof. Computing system 100 may include one or more additional functional modules 150 that include additional functionality.

One skilled in the art will appreciate that a "computing system" could be embodied as a server, an embedded computing system, a personal computer, a console, a personal digital assistant (PDA), a cell phone, a tablet computing device, a quantum computing system, or any other suitable computing device, or combination of devices without deviating from the scope of the invention. Presenting the above-described functions as being performed by a "system" is not intended to limit the scope of the present invention in any way, but is intended to provide one example of the many embodiments of the present invention. Indeed, methods, systems, and apparatuses disclosed herein may be implemented in localized and distributed forms consistent with computing technology, including cloud computing systems. The computing system could be part of or otherwise accessible by a local area network (LAN), a mobile communications network, a satellite communications network, the Internet, a public or private cloud, a hybrid cloud, a server farm, any combination thereof, etc. Any localized or distributed architecture may be used without deviating from the scope of the invention.

It should be noted that some of the system features described in this specification have been presented as modules, in order to more particularly emphasize their implementation independence. For example, a module may be implemented as a hardware circuit comprising custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the invention.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

Embodiments described herein provide for assisted task mining using LLMs. Such assisted task mining generates a structured definition of a graph of a workflow, for example, in the DOT (DAG (directed acyclic graph) of tomorrow) language grammar, based on a natural language description of the workflow. Each node of the structured definition of the graph, which corresponds to a step of the workflow, is mapped to at least one corresponding API for performing that step. Advantageously, embodiments described herein provide for the automatic translation of natural language descriptions of workflows into a structured definition of a graph, thereby facilitating visualization and manipulation of the workflows.

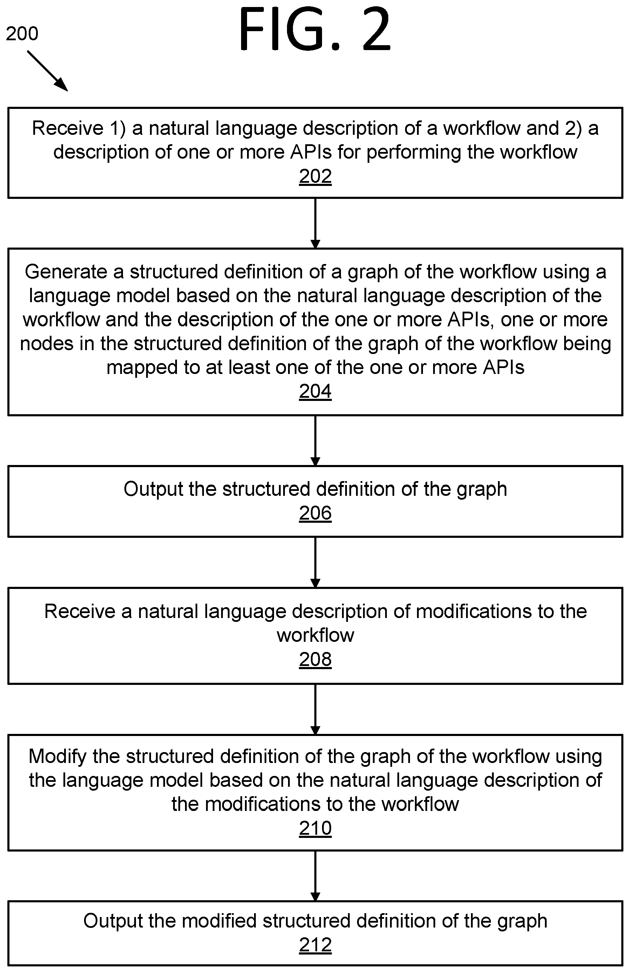

FIG. 2 shows a method 200 for automatically generate a structured definition of a graph of a workflow, in accordance with one or more embodiments. The steps of method 200 may be performed by one or more computing systems, such as, e.g., computing system 100 of FIG. 1.

At step 202 of FIG. 2, 1) a natural language description of a workflow and 2) a description of one or more APIs (application programming interfaces) are received. The natural language description of the workflow and the description of the one or more APIs may be received as text, voice, or any other suitable form.

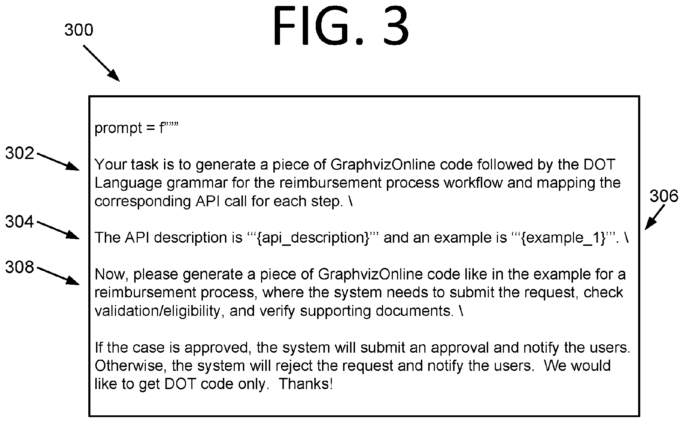

In one embodiment, the natural language description of the workflow and the description of the one or more APIs are received via one or more prompts. The one or more prompts may be received, for example, from a user interacting with a computing system (e.g., computing system 100 of FIG. 1) via a chat assistant or from a computer program (e.g., code) executing on a computing system (e.g., computing system 100 of FIG. 1) via one or more APIs. The one or more prompts comprise instructions defining one or more tasks to be performed by a language model. In one embodiment, the one or more tasks comprise generating a structure definition of a graph of a workflow. The instructions refer to guidelines or directions to guide the behavior and output of the language model. The instructions may include, for example, commands, questions, constraints, requirements, contextual information, and/or any other guideline or direction guiding the behavior and output of the language model. An exemplary prompt is shown in FIG. 3, described in further detail below.

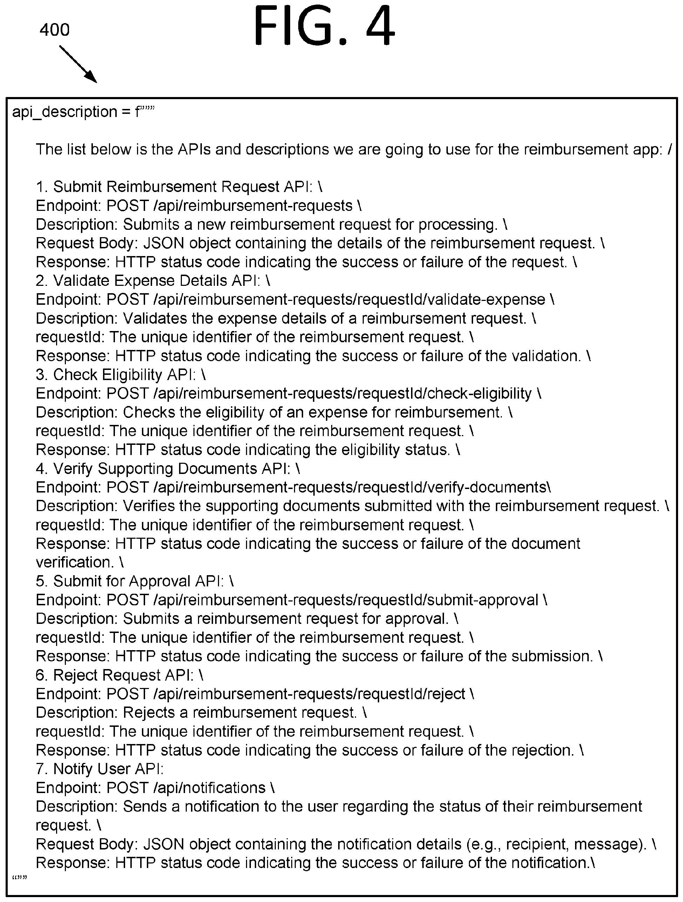

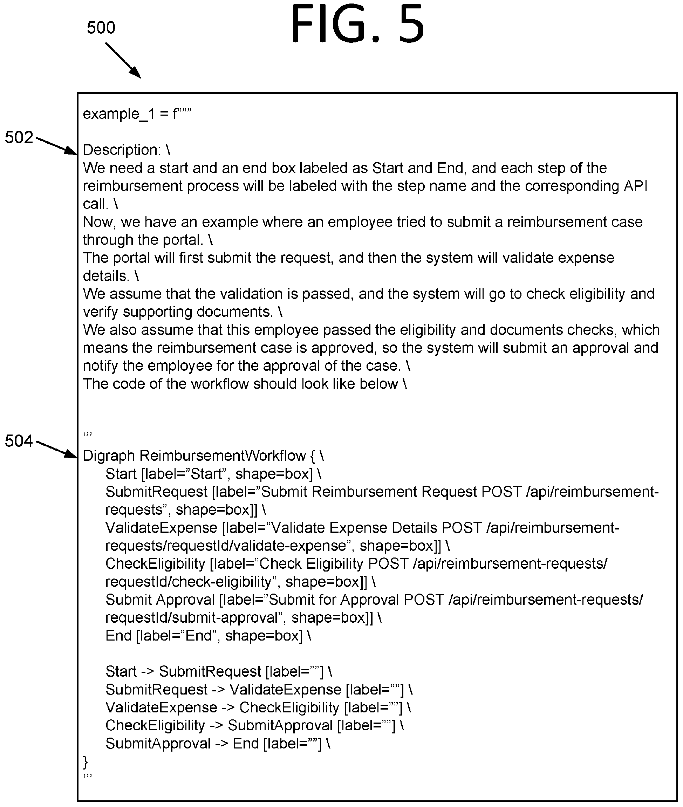

FIG. 3 shows an exemplary prompt 300 for generating a structured definition of a graph in DOT language grammar for a reimbursement process workflow, in accordance with one or more embodiments. Prompt 300 comprises instructions 302, API descriptions 304, an example 306, and a natural language description 308 of the reimbursement process workflow. Instructions 302 comprise instructions for generating a structured definition of a graph in the DOT language grammar for the reimbursement process workflow and for mapping corresponding API calls, defined in API descriptions 304, to each step of the reimbursement process workflow in the structured definition of the graph. API descriptions 304 are defined by calling the function {api_description}, shown in FIG. 4. Example 306 is an example of a natural language description of a workflow and a corresponding structured definition of a graph of the workflow, defined by calling the function {example_1} as shown in FIG. 5. Natural language description 308 is a natural language description of steps of the reimbursement process workflow. In one example, prompt 300 is received at step 202 of FIG. 2, where the natural language description of the workflow is natural language description 306 and the description of the one or more APIs is API descriptions 304.

FIG. 4 shows illustrative API descriptions 400, in accordance with one or more embodiments. API descriptions 400 comprise descriptions of various APIs available for performing steps of a reimbursement process workflow. As shown in FIG. 4, API descriptions 400 comprise descriptions for the following exemplary APIs: Submit Reimbursement Request API, Validate Expense Details API, Check Eligibility API, Verify Supporting Documents API, Submit for Approval API, Reject Request API, and Notify User API. API descriptions 400 define the function {api_description} called in prompt 300 of FIG. 3.

FIG. 5 shows an illustrative example 500 of a natural language description 502 of a reimbursement process workflow and a corresponding structured definition 504 of a graph in DOT language grammar for the reimbursement process workflow, in accordance with one or more embodiments. Example 500 defines the function {example_1} called in prompt 300 of FIG. 3.

Referring back to FIG. 2, at step 204, a structured definition of a graph of the workflow is generated using a language model based on the natural language description of the workflow and the description of the one or more APIs. One or more nodes in the structured definition of the graph of the workflow is mapped to at least one of the one or more APIs.

The structured definition of the graph of the workflow is a definition of the structure of the nodes and edges of the graph of the workflow. Each node defined in the structured definition of the graph represents a step or activity of the workflow and each edge defined in the structured definition of the graph defines connections between the nodes (representing steps or activities of the workflow). The graph of the workflow may be defined in the structured definition as a directed graph or an undirected graph. The structured definition of the graph of the workflow may be in any suitable format.

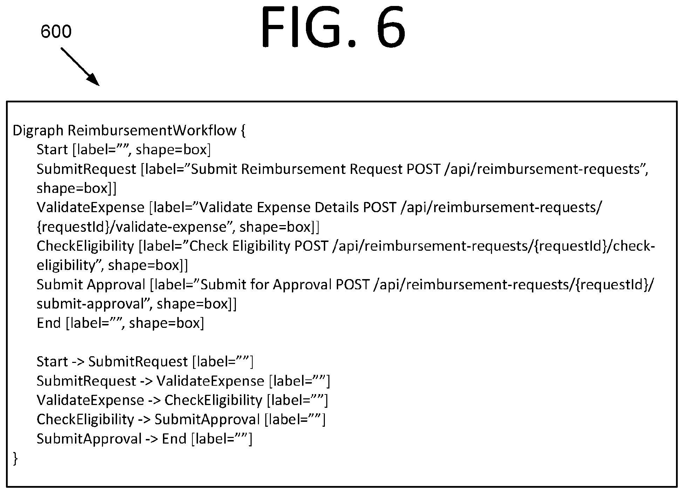

In one embodiment, the structured definition of the graph of the workflow is in the DOT language grammar. FIG. 6 is an exemplary structured definition of a graph 600 of a reimbursement process workflow in the DOT language grammar generated based on a natural language description of the reimbursement process workflow received via prompt 300 of FIG. 3, in accordance with one or more embodiments. As shown in FIG. 6, the graph of the reimbursement process workflow in the DOT language grammar is defined as a directed graph (digraph). The nodes Start, SubmitRequest, ValidateExpense, CheckEligibility, Sumit Approval, and End are defined between the curly braces {}. Each node corresponds to a step/activity of the workflow. The edges are defined using "->" to define connections between nodes. Labels, shapes, and other attributes (e.g., color, style, etc.) of the nodes, edges, or the entire graph are defined using brackets []. As shown in FIG. 6, each node (aside from the Start and End nodes) is labeled with, or mapped to, an API defined in API descriptions 400 of FIG. 4 for performing the corresponding step of the reimbursement process workflow.

Referring back to FIG. 2, a language model is an artificial intelligence/machine learning model trained to predict a sequence of words. In one embodiment, the language model is an LLM. However, the language model may be any other suitable language model for generating the response, such as, e.g., a small language model having relatively fewer parameters as compared to large language models.

An LLM is a deep learning model trained to, e.g., recognize, summarize, translate, predict, and generate content based on a very large training dataset. The large language model may be any suitable pre-trained deep learning based large language model. For example, the large language model may be based on the transformer architecture, which uses a self-attention mechanism to capture long-range dependencies in text. Examples of transformer-based large language models include GPT (generative pre-training transformer), BLOOM (BigScience Large Open-science Open-access Multilingual Language Model), BERT (Bidirectional Encoder Representations from Transformers), LaMDA (language model for dialogue applications), and Llama (large language model Meta AI). In one embodiment, the large language model is fine-tuned for generating the response.

The language model receives as input the one or more prompts (comprising the natural language description of the workflow and the description of the one or more APIs) and generates as output the structured definition of the graph of the workflow. For instance, in the examples shown in FIGS. 3-6, the language model receives as input prompt 300 of FIG. 3, API descriptions 400 of FIG. 4, and example 500 of FIG. 5 and generates as output structured definition of a graph 600 in the DOT language grammar.

At step 206 of FIG. 2, the structured definition of the graph of the workflow is output. For example, the structured definition of the graph of the workflow can be output by displaying the graphical visualization of the workflow based on the structured definition of the graph of the workflow on a display device of a computer system (e.g., display 125 of computing system 100 of FIG. 1), storing the structured definition of the graph of the workflow on a memory or storage of a computer system (e.g., memory 115 of computing system 100 of FIG. 1), or by transmitting the structured definition of the graph of the workflow to a remote computer system (e.g., computing system 100 of FIG. 1).

In one embodiment, for example, in response to the graphical visualization of the workflow defined based on the structured definition of the graph of the workflow displayed on a display device, the structured definition of the graph may be modified according to steps 208-212.

At step 208 of FIG. 2, a natural language description of modifications to the workflow is received. The natural language description of the modifications to the workflow may be received, for example, in response to the graphical visualization of the workflow defined based on the structured definition of the graph of the workflow displayed on a display device. The natural language description of the workflow and the description of the one or more APIs may be received as text, voice, or any other suitable form. Similar to step 202, the natural language description of the modifications to the workflows may be received via one or more prompts. In one embodiment, the modifications comprise the addition of one or more new steps to the workflow and/or highlighting one or more steps of the workflow. However, the modifications may comprise any other suitable modification to the workflow, such as, e.g., removing steps from the workflow, merging the workflow with another workflow, etc.

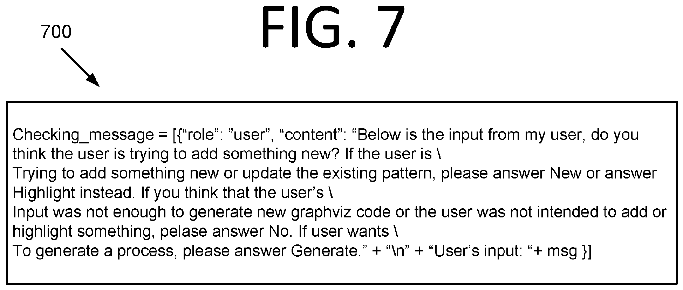

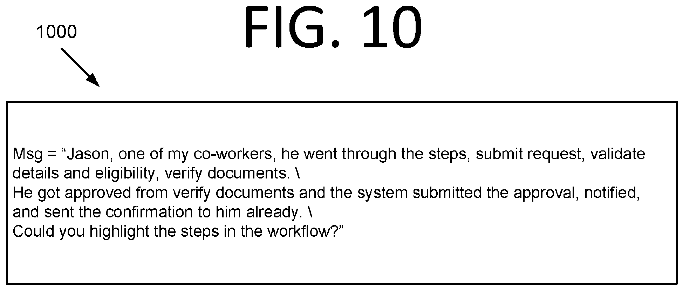

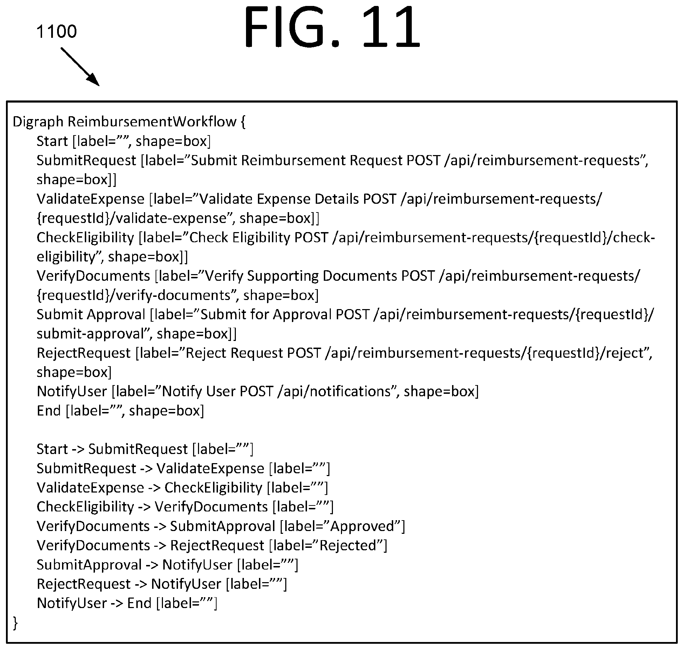

The natural language description of the modifications to the workflow may be received as a template sending language model. The template sending language model is a template defining instructions for performing the modifications and may include or reference user input. FIGS. 7 and 10 show examples of template sending language models, as will be described in further detail below. FIG. 11 shows an example of a modified structured definition of the graph of the workflow, as will be described in further detail below.

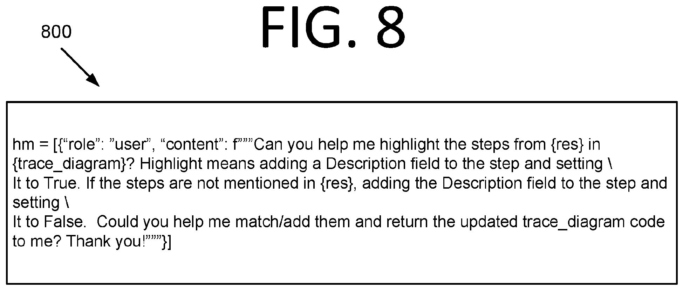

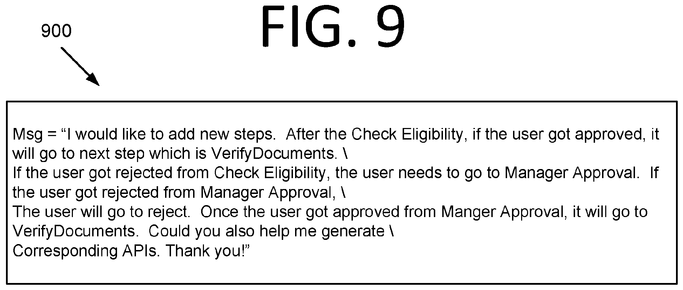

FIG. 7 shows an exemplary template sending language model 700 for adding one or more new steps to a workflow or highlighting one or more steps of the workflow, in accordance with one or more embodiments. In one example, template sending language model is for adding one or more new steps to, or highlighting one or more steps of, the reimbursement process workflow by adding one or more new nodes to, or highlighting nodes of, structured definition of a graph 600 of FIG. 6. Template sending language model 700 references user input defined in "msg." Exemplary user input defined in "msg" is shown in FIGS. 8 and 9.

FIG. 8 shows exemplary user input 800 defining "msg" for adding one or more new steps to a reimbursement process workflow, in accordance with one or more embodiments. User input 800 defines "msg" referenced in template sending language model 700.

FIG. 9 shows exemplary user input 900 defining "msg" for highlighting one or more steps in a reimbursement process workflow, in accordance with one or more embodiments. User input 900 defines "msg" referenced in template sending language model 700.

FIG. 10 shows an exemplary template sending language model 1000 for highlighting one or more steps of the workflow, in accordance with one or more embodiments. The one or more steps of the workflow are highlighted by adding the description field to the corresponding node and setting it to true in the structured definition of the graph of the workflow. The one or more steps of the workflow to be highlight are defined in the function {res} and the structured definition of the graph of the workflow are defined in the function {trace_diagram}.

FIG. 11 is an exemplary modified structured definition of a graph 1100 of a reimbursement process workflow in the DOT language grammar, in accordance with one or more embodiments. Modified structured definition of a graph 1100 of FIG. 11 is structured definition of a graph 600 modified or updated based on template sending language model 700 of FIG. 7 and user input 800 of FIG. 8 to add nodes for the steps VerifyDocuments, RejectRequest, and NotifyUser (along with updated edges).

Referring back to FIG. 2, at step 212, the modified structured definition of the graph is output. For example, the modified structured definition of the graph of the workflow can be output by displaying the graphical visualization defined by the modified structured definition of the graph of the workflow on a display device of a computer system (e.g., display 125 of computing system 100 of FIG. 1), storing the modified structured definition of the graph of the workflow on a memory or storage of a computer system (e.g., memory 115 of computing system 100 of FIG. 1), or by transmitting the modified structured definition of the graph of the workflow to a remote computer system (e.g., computing system 100 of FIG. 1).

The steps and sub-steps disclosed herein, including process steps and sub-steps performed in FIG. 2, may be performed by a computer program, encoding instructions for the processor(s) to perform at least part of the process(es) described in FIG. 2, in accordance with embodiments of the present invention. The computer program may be embodied on a non-transitory computer-readable medium. The computer-readable medium may be, but is not limited to, a hard disk drive, a flash device, RAM, a tape, and/or any other such medium or combination of media used to store data. The computer program may include encoded instructions for controlling processor(s) of a computing system (e.g., processor(s) 110 of computing system 100 of FIG. 1) to implement all or part of the process steps and sub-steps described with respect to FIG. 2, which may also be stored on the computer-readable medium.

The computer program can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments of the present invention, as generally described and illustrated in the figures herein, may be arranged and designed in a wide variety of different configurations. Thus, the detailed description of the embodiments of the present invention, as represented in the attached figures, is not intended to limit the scope of the invention as claimed, but is merely representative of selected embodiments of the invention.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

## Claims

1. A computer-implemented method comprising:
receiving 1) a natural language description of a workflow and 2) a description of one or more APIs (application programming interfaces) for performing the workflow;
generating a structured definition of a graph of the workflow using a language model based on the natural language description of the workflow and the description of the one or more APIs, one or more nodes in the structured definition of the graph of the workflow being mapped to at least one of the one or more APIs; and
outputting the structured definition of the graph of the workflow.

2. The computer-implemented method of claim 1, further comprising:
receiving a natural language description of modifications to the workflow; and
modifying the structured definition of the graph of the workflow using the language model based on the natural language description of the modifications to the workflow; and
outputting the modified structured definition of the graph of the workflow.

3. The computer-implemented method of claim 2, wherein the modifications to the workflow comprise an addition of one or more steps to the workflow.

4. The computer-implemented method of claim 2, wherein the modifications to the workflow comprise highlighting one or more steps of the workflow.

5. The computer-implemented method of claim 1, wherein:
receiving 1) a natural language description of a workflow and 2) a description of one or more APIs (application programming interfaces) for performing the workflow comprises receiving an example comprising a natural language description of an exemplary workflow and a corresponding structured definition of a graph of the exemplary workflow; and
generating a structured definition of a graph of the workflow using a language model based on the natural language description of the workflow and the description of the one or more APIs comprises generating the structured definition of the graph of the workflow based on the example.

6. The computer-implemented method of claim 1, wherein the structured definition of the graph of the workflow is in DOT (DAG (directed acyclic graph) of tomorrow) language grammar.

7. The computer-implemented method of claim 1, wherein the language model is a large language model.

8. A system comprising:
a memory storing computer program instructions; and
at least one processor configured to execute the computer program instructions, the computer program instructions configured to cause the at least one processor to perform operations of:
receiving 1) a natural language description of a workflow and 2) a description of one or more APIs (application programming interfaces) for performing the workflow;
generating a structured definition of a graph of the workflow using a language model based on the natural language description of the workflow and the description of the one or more APIs, one or more nodes in the structured definition of the graph of the workflow being mapped to at least one of the one or more APIs; and
outputting the structured definition of the graph of the workflow.

9. The system of claim 8, the operations further comprising:
receiving a natural language description of modifications to the workflow; and
modifying the structured definition of the graph of the workflow using the language model based on the natural language description of the modifications to the workflow; and
outputting the modified structured definition of the graph of the workflow.

10. The system of claim 9, wherein the modifications to the workflow comprise an addition of one or more steps to the workflow.

11. The system of claim 9, wherein the modifications to the workflow comprise highlighting one or more steps of the workflow.

12. The system of claim 8, wherein:
receiving 1) a natural language description of a workflow and 2) a description of one or more APIs (application programming interfaces) for performing the workflow comprises receiving an example comprising a natural language description of an exemplary workflow and a corresponding structured definition of a graph of the exemplary workflow; and
generating a structured definition of a graph of the workflow using a language model based on the natural language description of the workflow and the description of the one or more APIs comprises generating the structured definition of the graph of the workflow based on the example.

13. The system of claim 8, wherein the structured definition of the graph of the workflow is in DOT (DAG (directed acyclic graph) of tomorrow) language grammar.

14. The system of claim 8, wherein the language model is a large language model.

15. A non-transitory computer-readable medium storing computer program instructions, the computer program instructions, when executed on at least one processor, cause the at least one processor to perform operations comprising:
receiving 1) a natural language description of a workflow and 2) a description of one or more APIs (application programming interfaces) for performing the workflow;
generating a structured definition of a graph of the workflow using a language model based on the natural language description of the workflow and the description of the one or more APIs, one or more nodes in the structured definition of the graph of the workflow being mapped to at least one of the one or more APIs; and
outputting the structured definition of the graph of the workflow.
